# EUROPÄISCHE PATENTANMELDUNG

(11) **EP 2 290 274 A2**
(43) Veröffentlichungstag der Anmeldung: **02.03.2011**
(21) Anmeldenummer: 10169320.8
(22) Anmeldetag: 13.07.2010
(51) Int. Cl.: F16K 11/074, F16K 41/00

(54) **Steuerventil**

(30) Priorität: 26.08.2009 DE 102009028889
(71) Anmelder: Robert Bosch GmbH, 70442 Stuttgart (DE)
(72) Erfinder: Reeb, Georg, 77815 Buehl Eisental (DE); Muschelknautz, Claudius, 77815 Buehl (DE)

(57) **Zusammenfassung**

Die Erfindung betrifft ein Steuerventil 1, insbesondere für einen Kühlkreislauf einer Brennkraftmaschine mit einer Achse 17, die mittels wenigstens eines Lagers 16 in einem Gehäuse 9 gelagert ist, und an der eine Regelscheibe 12 angeordnet ist, wobei die Achse 17 ausgelegt ist, die Regelscheibe 12 zu verdrehen, um mit wenigstens einer in der Regelscheibe 12 angeordneten Steueröffnung 33 einen Volumenstrom zu steuern, wobei zwischen dem Lager 16 der Achse 17 und der Regelscheibe 12 ein erstes Dichtelement 26 mit einer Dichtfläche 41 angeordnet ist, das die Achse 17 umgreift, wobei eine erste Dichtfeder 27 das erste Dichtelement 26 gegen die Regelscheibe 12 drückt.

## Beschreibung

Die Erfindung betrifft ein Steuerventil, insbesondere für einen Kühlkreislauf einer Brennkraftmaschine, mit einer Achse, die mittels eines Lagers in einem Gehäuse gelagert ist, und an der eine Regelscheibe angeordnet ist, wobei die Achse ausgelegt ist, die Regelscheibe zu verdrehen, um mit wenigstens einer in der Regelscheibe angeordneten Öffnung einen Volumenstrom zu steuern.

### Stand der Technik

Ein Kühlkreislauf eines Kraftfahrzeuges beinhaltet in der Regel eine zu kühlende Wärmequelle, beispielsweise eine Brennkraftmaschine, die mittels eines Kühlmediums durch freie oder erzwungene Konvektion gekühlt werden soll. Um einerseits die Brennkraftmaschine vor Überhitzung zu schützen und andererseits die Abwärme der Brennkraftmaschine beispielsweise zur Beheizung des Fahrgastraumes eines Kraftfahrzeuges zu nutzen, wird in der Brennkraftmaschine ein Kühlmittel umgepumpt, das die überschüssige Wärmeenergie aus der Verbrennung aufnimmt und in gewünschtem Maße abführt.

Der Kühlkreislauf umfasst in der Regel verschiedene Teilkreisläufe, wie beispielsweise einen Kühlerzweig, einen Bypasszweig und/oder einen Heizungswärmetauscherzweig. Über einen im Kühlerzweig angeordneten Kühler oder Radiator wird die überschüssige Wärmemenge des Kühlmittels an die Umgebung abgegeben. Ein Heizungswärmetauscher erwärmt die durch ihn strömende Luft zur Beheizung des Fahrgastraumes. Die Verteilung des Kühlmittelstroms auf verschiedene Zweige des Kühl- bzw. Heizungskreislaufes der Brennkraftmaschine wird üblicherweise durch ein Steuerventil gesteuert.

Hierzu wird in der DE 10 2006 053 310 A1 vorgeschlagen, die gewünschte Kühlmitteltemperatur durch das Mischen eines gekühlten und eines ungekühlten Kühlmittelstroms einzustellen. Dazu wird ein Steuerventil verwendet, dessen Durchstromöffnungen durch ein Verdrehen veränderlich sind. Um die Durchstromöffnungen zu verstellen, ist in dem Steuerventil ein Elektromotor angeordnet, der über ein Schneckengetriebe die Position einer Regelscheibe so verstellt, dass durch das Steuerventil ein gewünschter Kühlmittelstrom strömt. Der Elektromotor ist dabei partiell vom Kühlmittelstrom getrennt, sodass bestimmte Komponenten des Elektromotors, wie etwa der Rotor und Getriebe mit Kühlmittel umflutet sind.

Aus der DE 10 2006 053 307 A1 ist ferner bekannt, die Öffnungen der Regelscheibe durch Dichtelemente in Form von Dichtringen, sowie mit Federelementen, die das Dichtelement an die Regelscheibe andrücken, zu realisieren, sodass die Leckageraten bei einem geschlossenem Kühlkreislauf nahezu null sind.

### Offenbarung der Erfindung

Es ist Aufgabe der Erfindung, ein verbessertes Steuerventil bereitzustellen.

Diese Aufgabe wird durch ein Steuerventil gemäß Anspruch 1 gelöst. Bevorzugte Ausführungsformen sind in den abhängigen Ansprüchen angegeben.

Erfindungsgemäß wurde erkannt, dass der Antrieb des Steuerventils vom Kühlkreislauf dadurch abgekoppelt werden kann, dass zwischen einem Lager einer Achse und einer Regelscheibe ein erstes Dichtelement mit einer ersten Dichtfläche angeordnet ist, wobei das erste Dichtelement die Achse umgreift und durch eine erste Dichtfeder an einer Gleitfläche gegen die Regelscheibe gedrückt wird.

Dies hat den Vorteil, dass ein an der Achse angeordneter Antrieb durch das erste Dichtelement von dem Kühlkreislauf der Brennkraftmaschine getrennt ist, sodass der Antrieb kostengünstiger als Antriebe, die mit Kühlmittel durchströmt sind, ausgebildet sein kann.

In einer weiteren Ausführungsform der Erfindung ist an der Achse des Steuerventils ein Zahnrad angeordnet, das eine zweite Gleitfläche aufweist, die einem Gleitdichtelement des Lagers zugeordnet ist. Dies hat den Vorteil, dass Leckageströme, die das erste Dichtelement überwunden haben, an dem Gleitdichtelement weiter reduziert werden.

In einer weiteren Ausführungsform der Erfindung ist an der Achse im Bereich des Lagers ein Spaltdichtelement angeordnet. Dies hat den Vorteil, dass Leckageströme, die das erste Dichtelement überwunden haben, einfach und effizient durch das Spaltdichtelement im Bereich des Lagers auf nahezu null reduziert werden können.

In einer weiteren Ausführungsform der Erfindung ist das Zahnrad mit der Achse kraft- und/oder formschlüssig verbunden. Dies hat den Vorteil, dass das Zahnrad zuverlässig ein in das Zahnrad eingebrachtes Drehmoment auf die Achse weiterleiten kann.

In einer weiteren Ausführungsform der Erfindung sind das erste Dichtelement und die erste Dichtfeder einteilig ausgebildet. Auf diese Weise sind das Dichtelement und die Dichtfeder einfach an der Achse im Gehäuse des Steuerventils montierbar.

In einer weiteren Ausführungsform der Erfindung ist das erste Dichtelement mit einem zweiten Dichtelement, das an einer Steueröffnung der Regelscheibe angeordnet ist, verbunden und einteilig ausgeführt. Auf diese Weise wird eine einfache Montierbarkeit der an der Regelscheibe angeordneten beiden Dichtelemente gewährleistet.

In einer weiteren Ausführungsform der Erfindung ist die erste Dichtfeder mit einer zweiten Dichtfeder verbunden, die ausgelegt ist, das zweite Dichtelement an die Gleitfläche der Regelscheibe zu drücken. Auf diese Weise wird ein gleichmäßiger Anpressdruck des oder der Dichtelemente an die Regelscheibe gewährleistet.

In einer weiteren Ausführungsform der Erfindung weist die Regelscheibe und/oder eines der beiden Dichtelemente einen verschleißfesten Werkstoff auf, insbesondere einen Keramikwerkstoff. Dies hat den Vorteil, dass eine zuverlässige, abrasionsbeständige und dauerhaltbare Abdichtung der Regelscheibe zur Verfügung gestellt werden kann.

In einer weiteren Ausführungsform der Erfindung weist die Achse an einer axialen Endfläche eine erste Ausbuchtung auf, die im Bereich einer Rotationsachse der Achse angeordnet ist, wobei an einem Getriebedeckel der ersten Ausbuchtung eine Anlauffläche zugeordnet ist, um die axiale Bewegungsrichtung der Achse mittels der Anlauffläche zu begrenzen. Dies hat den Vorteil, dass ein hydraulischer Druck, der auf die Regelscheibe wirkt, nicht zu einem Überdrücken der Dichtfeder führt, da nach einem Überschreiten einer maximalen Kraft bzw. einer maximalen Verschiebung der Achse, die Kraft über die axiale Endfläche am Getriebedeckel abgestützt wird.

Nachfolgend wird die Erfindung anhand einer Zeichnung näher erläutert. Dabei zeigt:

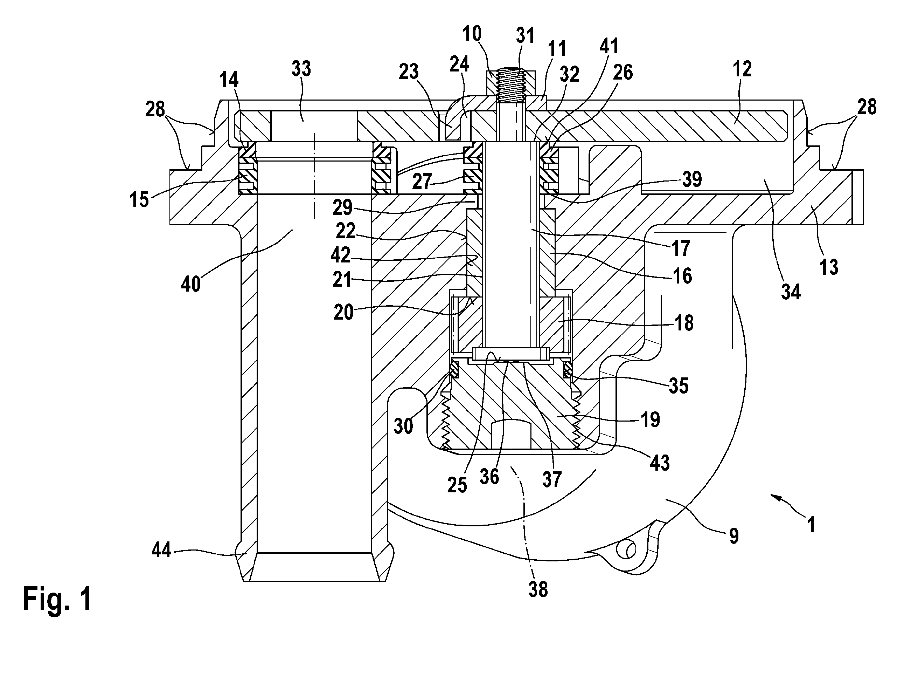

Fig. 1 eine schematische Schnittansicht eines Steuerventils.

Das in Fig. 1 gezeigte Steuerventils 1 umfasst dabei ein Gehäuse 9, das einen ersten Anschluss 44 zu einem Kühlmittelkreislauf einer Brennkraftmaschine aufweist. In dem Gehäuse 9 ist mittels eines Lagers 16 eine Achse 17 gelagert. Unterseitig ist an der Achse 17 ein Stirnrad 18 als Zahnrad angeordnet, welches mittels einer form- und/oder kraftschlüssigen Verbindung mit der Achse 17 verbunden ist. Im oberen Bereich der Achse 17 ist ein erster Absatz 32 an der Achse 17 angeordnet, der einer Regelscheibe 12 zugeordnet ist. Die Regelscheibe 12 ist mittels einer Mutter 10, die mit dem Gewinde 31 verschraubt ist, gegen den ersten Absatz 32 verspannt. Die Mutter 10 befestigt des Weiteren einen Mitnehmer 11, der mittels einer Lasche 23 in eine Öffnung 24 der Regelscheibe 12 eingreift, um so ein unbeabsichtigtes Verdrehen der Regelscheibe 12 zu verhindern.

Oberhalb der Regelscheibe 12 kann das Gehäuse 9 mittels eines nicht dargestellten Gehäusedeckels verschlossen werden, wobei der Gehäusedeckel über wenigstens einen zweiten Anschluss zu dem Kühlkreislauf der Brennkraftmaschine verfügt. Der Gehäusedeckel wird dabei an einer äußeren Ventilgehäuseflächen 28 angeordnet, um zuverlässig das Gehäuse 9 zu verschließen. Unterseitig wird das Gehäuse 9 des Steuerventils 1 durch einen Getriebedeckel 19 verschlossen, der über eine Dichtringaufnahme 35 verfügt, in der ein Dichtring 30 zum Abdichten des Steuerventils 1 gegenüber Umwelteinflüssen angeordnet ist. Des Weiteren ist an dem Getriebedeckel 19 eine Anlauffläche 25 ausgebildet, die einer gegenüberliegenden axialen Endfläche der Achse 17 zugeordnet ist. An dieser axialen Endfläche ist im Bereich der Rotationsachse 39 der Achse 17 eine erste Ausbuchtung 36 ausgebildet. Die Anlauffläche 25 ist gegenüber der Kontur des Getriebedeckels 19 mittels einer zweiten Ausbuchtung 37 angehoben, um diese bei der Herstellung kostengünstig aber mit hoher Oberflächengüte mittels z. B. Schleifen, Polieren, Läppen oder Honen zu versehen.

Die Steuerung eines Volumenstroms für einen Kühlmittelkreislauf einer Brennkraftmaschine durch das Steuerventil 1 erfolgt dadurch, dass die Regelscheibe 12 und deren Steueröffnung 33 gegenüber einem Flusskanal 40 durch den Antrieb so verdreht wird, dass sich der Querschnitt der Steueröffnung 33 gegenüber dem Flusskanal 40 verändert. Die Verdrehung der Regelscheibe 12 wird dabei mittels eines nicht dargestellten Elektromotors erreicht, der das an der Achse 17 befestigte Stirnrad 18 antreibt. Das auf die Achse 17 übertragene Drehmoment dient dazu, die Regelscheibe 12 zu verdrehen. Um die Leckageströme an dem Flusskanal 40 möglichst gering zu halten, ist der Flusskanal 40 gegenüber der Regelscheibe 12 mittels eines ersten Dichtelementes 14 und einer ersten Dichtfeder 15 abgedichtet.

Um den Antrieb mit einem Elektromotor und einem Getriebe gegenüber einem Innenraum 34, der mit dem Kühlmittel der Brennkraftmaschine durchflutet ist, abzudichten, ist am Gehäuse 9 zwischen dem Lager 16 und der Regelscheibe 12 eine zweite Dichtfeder 27 mit einem zweiten Dichtelement 26 angeordnet. Die zweite Dichtfeder 27 stützt sich dabei an einem zweiten Absatz 39 des Gehäuses 9 ab, um so das zweite Dichtelement 26 mit einer Gleitfläche 41 als Dichtfläche gegen die Regelscheibe 12 zu drücken. Sowohl die zweite Dichtfeder 27 als auch das zweite Dichtelement 26 umfassen dabei die Achse 17, um so die Achse 17 zuverlässig gegen den Innenraum 34 des Steuerventils 1 abzudichten.

Um eine zuverlässige, abrasionsbeständige und dauerhaft haltbare Dichtverbindung zu gewährleisten, ist die Regelscheibe 12 und/oder eines der beiden Dichtelemente 14, 26 aus einem verschleißfesten Werkstoff, insbesondere einem Keramikwerkstoff, hergestellt. Um die Herstellung der Dichtverbindung zu vereinfachen, kann alternativ das zweite Dichtelement 26 zusammen mit der zweiten Dichtfeder 27 einteilig ausgebildet sein. Dies hat den Vorteil, dass die Montage der einteiligen Dichtverbindung erleichtert gegenüber einer mehrteiligen Dichtverbindung ist. Ferner ist denkbar, die erste Dichtfeder 15 zusammen mit der zweiten Dichtfeder 27 als eine einteilige Dichtfeder auszuführen. Ebenso kann hierfür das erste Dichtelement 14 mit dem zweiten Dichtelement 26 zu einem einteiligen Dichtelement ausgebildet sein oder zusammen mit der einteiligen Dichtfeder zu einem einteiligen Dichtungsverbund zusammengefasst sein, um die Montage des Dichtungsverbunds einfach und kostengünstig zu gewährleisten.

Um den Eintritt von Leckageströmen in den Elektromotor zu verhindern, verfügt das Lager 16 über eine in der Lagerfläche angeordnete Spaltdichtung 21. Die Spaltdichtung 21 ist so ausgebildet, dass die Spaltdichtung 21 im Lager 16 den Leckagestrom an seinen Durchtritt zum Antrieb des Steuerventils 1 behindert. Die Außenfläche 22 des Lagers 16 ist dabei gegenüber der Lagerfläche 42 abgedichtet, um ein Durchtreten des Leckagestroms über die Außenfläche 22 des Lagers 16 zu verhindern. Das Lager 16 ist einteilig ausgeführt. Denkbar wäre auch eine mehrteilige Ausführung, insbesondere eine zweiteilige Ausführung, um die Achse 17 gegenüber den über das Stirnrad 18 eingebrachten Kräften abzustützen. Die Spaltdichtung 21 könnte alternativ auch als Gleitdichtung ausgebildet sein. Um den Leckagestrom zusätzlich zu reduzieren und eine optimierte Dichtung des Antriebs zur Verfügung zu stellen, weist das Lager 16 an seiner unteren axialen Endfläche eine Gleitdichtung 20 auf, die zur Abdichtung einer axialen Endfläche des Stirnrads 18 zugeordnet ist. Die Gleitdichtung 20 könnte alternativ auch als Spaltdichtung z.B. als Labyrinthdichtung ausgeführt sein.

Durch die Abdichtung des Innenraums 34 des Steuerventils 1 mittels des zweiten Dichtelements 26, der zweiten Dichtfeder 27, der Spaltdichtung 21 und der Gleitdichtung 20 kann ein Dichtungsverbund zur Verfügung gestellt werden, der den Antrieb des Steuerventils 1 gegenüber dem Kühlkreislauf der Brennkraftmaschine nahezu vollständig abdichtet. Neben dem dargestellten Dichtungsverbund ist ebenso eine Kombination aus dem genannten zweiten Dichtelement 26, der Dichtungsfeder 27, der Spaltdichtung 21 und der Gleitdichtung 20 denkbar. Dies hat den Vorteil, dass der Antrieb nicht mit Kühlmittel umflutet ist, sodass der Antrieb kostengünstig ausgebildet werden kann. Des Weiteren kann der Luftspalt in dem Elektromotor des Antriebs reduziert ausgebildet sein, da sich statt Kühlmittel Luft im Luftspalt befindet, sodass der Elektromotor für den Antrieb des Steuerventils einen höheren Wirkungsgrad aufweist.

Die zweite Dichtungsfeder 27 dient auch dazu, die axiale Position der Achse 17 zusammen mit der Regelscheibe 12 festzulegen. Dabei spannt die zweite Dichtungsfeder 27 die Achse 17 vor, indem die zweite Dichtungsfeder mittels des zweiten Dichtelements 27 die Regelscheibe 12 bzw. die Achse 17 mit dem Stirnrad 18 nach oben drückt, sodass das Stirnrad 18 mit seiner oberen axialen Endfläche an der Gleitdichtung 20 des Lagers 16 anliegt und so die axiale Position der Achse 17 in eine axiale Richtung festgelegt wird.

Wird die Regelscheibe 12 oberseitig mit einem hydraulischen Druck beaufschlagt, so verschiebt sich die Regelscheibe 12 zusammen mit der Achse 17 in Abhängigkeit vom anliegenden Druck und der Stellung der Steueröffnung 33 parallel zur Rotationsachse 39 nach unten. Wird die axiale Verschiebung der Achse 17 nach unten nicht unterbunden, so kann dies zu einer Überlastung der beiden Dichtungsfedern 15, 27 führen. Deshalb wird die axiale Verschiebung mit der Anlauffläche 25, an der die erste Ausbuchtung 36 der Achse 17 anschlägt, begrenzt. In der Ausführungsform beträgt der maximale Verschiebeweg etwa 0,05 bis 0,3 mm. Die Einstellung des maximalen Verschiebewegs wird dabei durch die Verdrehung des Getriebedeckels 19 in einer Verschraubung 43 festgelegt. Der maximale Verschiebeweg ist dabei zu begrenzen, um die Wirksamkeit der Gleitdichtung 20 durch ein erhöhtes Spaltmaß nicht zu reduzieren.

Dem Fachmann ist selbstverständlich geläufig, dass die Ausführung des Steuerventils beispielhaft ist. Wesentlich dabei ist jedoch, dass die Regelscheibe durch ein Dichtelement und eine Dichtfeder gegenüber dem Antrieb der Regelscheibe abgedichtet ist, um so einen kostengünstigen Antrieb des Steuerventils zu gewährleisten. Die Dichtwirkung des Dichtelements und der Dichtfeder kann dabei durch eine Spaltdichtung und/oder eine Gleitdichtung optional verbessert werden. Das Steuerventil eignet sich insbesondere zum Steuern eines Volumenstroms einer Brennkraftmaschine in einem Kraftfahrzeug.

## Patentansprüche

1. Steuerventil (1), insbesondere für einen Kühlkreislauf einer Brennkraftmaschine, mit einer Achse (17), die mittels wenigstens eines Lagers (16) in einem Gehäuse (9) gelagert ist, und an der eine Regelscheibe (12) angeordnet ist, wobei die Achse (17) ausgelegt ist, die Regelscheibe (12) zu verdrehen, um mit wenigstens einer in der Regelscheibe (12) angeordneten Steueröffnung (22) einen Volumenstrom zu steuern, **dadurch gekennzeichnet, dass** zwischen dem Lager (16) der Achse (17) und der Regelscheibe (12) ein erstes Dichtelement (26) mit einer Dichtfläche (41) angeordnet ist, das die Achse (17) umgreift, wobei eine erste Dichtfeder (27) das erste Dichtelement (26) gegen die Regelscheibe (12) drückt.

2. Steuerventil (1) nach Anspruch 1, **dadurch gekennzeichnet, dass** das Lager (16) und/oder das Zahnrad (18) eine Spaltdichtung (21) und/oder eine Gleitdichtung (20) aufweist.

3. Steuerventil (1) nach Anspruch 2, **dadurch gekennzeichnet, dass** die Achse (17) mit dem Zahnrad (18) kraft- und/oder formschlüssig verbunden ist.

4. Steuerventil (1) nach einem der Ansprüche 1 bis 3, **dadurch gekennzeichnet, dass** das erste Dichtelement (26) und die erste Dichtfeder (27) einteilig ausgebildet sind.

5. Steuerventil (1) nach einem der Ansprüche 1 bis 4, **dadurch gekennzeichnet, dass** das erste Dichtelement (26) mit einem zweiten Dichtelement (14), das an einer Steueröffnung (33) der Regelscheibe (12) angeordnet ist, einteilig ausgeführt ist.

6. Steuerventil (1) nach einem der Ansprüche 1 bis 5, **dadurch gekennzeichnet, dass** die erste Dichtfeder (15) mit einer zweiten Dichtfeder (27) verbunden ist.

7. Steuerventil (1) nach einem der Ansprüche 1 bis 6, **dadurch gekennzeichnet, dass** die Regelscheibe (12) und/oder eines der beiden Dichtelemente (14, 26) einen verschleissfesten Werkstoff, insbesondere einen Keramikwerkstoff, aufweisen.

8. Steuerventil (1) nach einem der Ansprüche 1 bis 7, **dadurch gekennzeichnet, dass** die Achse (17) an einer axialen Endfläche eine erste Ausbuchtung (36) aufweist, die im Bereich einer Rotationsachse (39) der Achse (17) angeordnet ist, wobei der ersten Ausbuchtung (36) an einem Getriebedeckel (19) eine Anlauffläche (25) zugeordnet ist, um die axiale Bewegungsrichtung der Achse (17) mittels der Anlauffläche (25) zu begrenzen.

9. Steuerventil (1) nach Anspruch 8, **dadurch gekennzeichnet, dass** die Anlauffläche (25) in dem Getriebedeckel (19) als zweite Ausbuchtung (27) ausgebildet ist.

10. Steuerventil (1) nach einem der Ansprüche 1 bis 9, **dadurch gekennzeichnet, dass** der Innenraum (34) des Gehäuses (9) des Steuerventils (1) zumindest teilweise Kühlmittel des Kühlkreislaufes der Brennkraftmaschine aufweist.

11. Steuerventil (1) nach einem der Ansprüche 1 bis 10, **dadurch gekennzeichnet, dass** das Lager (16) mehrteilig ausgeführt ist.
